# EUROPÄISCHE PATENTSCHRIFT

(11) **EP 2 118 469 B1**
(45) Veröffentlichungstag und Bekanntmachung des Hinweises auf die Patenterteilung: **30.03.2016**
(21) Anmeldenummer: 08707514.9
(22) Anmeldetag: 01.02.2008
(51) Int. Cl.: F02B 37/22, F02M 26/00, F02M 35/10

(54) **VERBRENNUNGSMOTOR**
COMBUSTION ENGINE
MOTEUR À COMBUSTION

(30) Priorität: 05.02.2007 DE 102007005702
(43) Veröffentlichungstag der Anmeldung: 18.11.2009
(73) Patentinhaber: BorgWarner, Inc., Auburn Hills, MI 48326-2872 (US)
(72) Erfinder: MÜNZ, Stefan, 67067 Ludwigshafen (DE)
(74) Vertreter: Hoefer & Partner Patentanwälte mbB
(86) Internationale Anmeldenummer: PCT/EP2008/000833
(87) Internationale Veröffentlichungsnummer: WO 2008/095658

(56) Entgegenhaltungen:
- WO-A-98/44255
- WO-A2-2006/122306
- DE-A1- 4 213 047
- DE-A1-102005 020 484
- US-A1- 2003 178 013
- US-A1- 2006 060 172
- "HICLONE TECHNICAL INFORMATION" INTERNET CITATION, [Online] 1. Januar 2004 (2004-01-01), XP001544038 Gefunden im Internet: URL:http://www.fuelsaver.com.au/hiclone.ph p> [gefunden am 2008-04-25]

## Beschreibung

Die Erfindung betrifft einen Verbrennungsmotor gemäß dem Oberbegriff des Anspruchs 1.

Ein gattungsgemäßer Verbrennungsmotor ist aus der WO 2006/122306 A2 bekannt.

Turbolader derartiger Verbrennungsmotoren werden eingesetzt, um zur Erfüllung der gesetzlich vorgeschriebenen Abgasgrenzwerte über einen weiten Betriebsbereich große Abgasmengen in die Ansaugstrecke des Motors zurückführen. Dies wird beim aktuellen Stand der Technik über eine sog. Hochdruck-Abgasrückführung durchgeführt. Die niederdruckseitige Abgasrückführung weist demgegenüber ein größeres Potential auf. Dabei wird das Abgas hinter der Turbine nach Austritt aus dem Dieselpartikelfilter entnommen und über ein Regelventil und gegebenenfalls über einen Kühler in die Frischluftstrecke vor den Verdichter des Abgasturboladers zurückgeführt. Dabei ist im Hinblick auf eine möglichst homogene Zuströmung zum Verdichter eine möglichst vollständige Durchmischung des rückgeführten Abgases mit der Frischluft von Vorteil, was aber bei einer Eindüsung ohne weitere Maßnahmen zu sehr langen Mischungsstrecken im Saugkanal führen würde. Dies erhöht den für die Einlassstrecke nötigen Bauraum, der häufig in Motorräumen moderner Fahrzeuge jedoch fehlt.

Es ist daher Aufgabe der vorliegenden Erfindung, einen Verbrennungsmotor mit einem Turbolader gemäß dem Oberbegriff des Anspruchs 1 zu schaffen, der die oben genannten Nachteile überwindet.

Die Lösung dieser Aufgabe erfolgt durch die Merkmale des Anspruchs 1.

So ist es bei dem erfindungsgemäßen Verbrennungsmotor vorgesehen, eine bestimmte Mischeinrichtung in die Ansaugleitung einzubauen, um eine möglichst vollständige Vermischung des rückgeführten Abgases mit der Frischluft zu erreichen. Diese Mischeinrichtung wird in der Ansaugleitung, in Frischluftströmungsrichtung gesehen, nach der Abgaseinmischöffnung und vor dem Verdichtereintritt angeordnet.

Die Unteransprüche enthalten vorteilhafte Weiterbildungen der Erfindung.

Weitere Einzelheiten, Vorteile und Merkmale der Erfindung ergeben sich aus nachfolgender Beschreibung eines Ausführungsbeispiels und der Zeichnung.

Es zeigt:
Fig. 1 eine schematisch stark vereinfachte Schnittdarstellung eines erfindungsgemäßen Verbrennungsmotors mit einem Turbolader;
Fig. 2 eine perspektivische Darstellung einer besonders bevorzugten Ausführungsform einer Mischeinrichtung in Form eines Blütenmischers;
Fig. 3 eine gemäß Fig. 2 entsprechende Darstellung des Blütenmischers, bei der die numerische Simulation der Durchmischung zweier unterschiedlicher Stoffströme dargestellt ist.

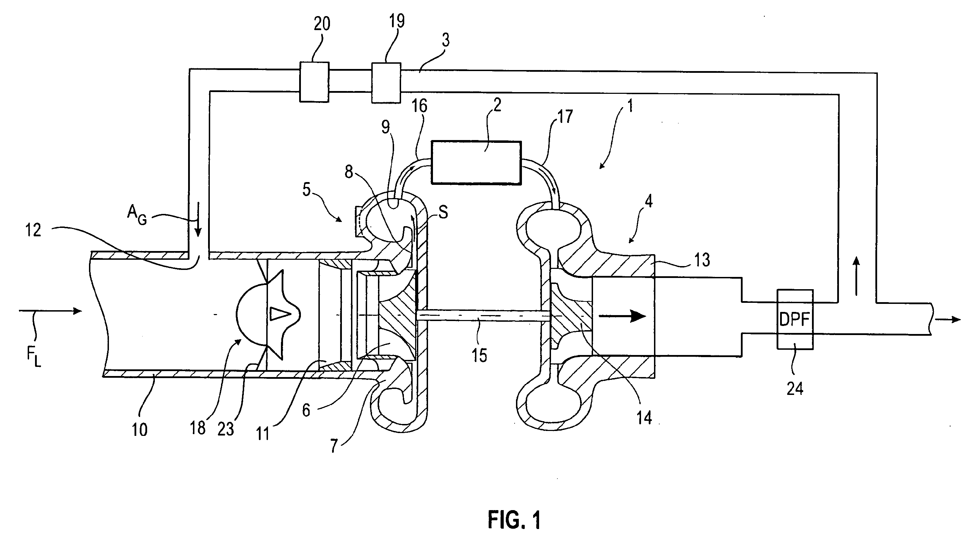

Der in der Fig. 1 dargestellte Turbolader 1 weist eine Turbine 4 mit einem in einem Turbinengehäuse 13 angeordneten Turbinenrad 14 auf. Dieses Turbinenrad 14 ist über eine Rotorwelle 15 mit einem in einem Verdichtergehäuse 7 angeordneten Verdichterrad 6 eines Verdichters 5 verbunden.

Eine Abgasrückführungsleitung 3 von einem Motor 2 führt über ein Regelventil 19 und einen Kühler 20 durch eine Abgaseinmischöffnung 12 in eine Ansaugleitung 10 des Motors 2. In der Ansaugleitung 10 ist eine Mischeinrichtung 18, insbesondere ein Blütenmischer, vor dem Verdichtereintritt 11 mittels einer Mischerhaltung 23 angeordnet. Der radiale Anteil der Strömungsrichtung S der durch das Verdichterrad 6 verdichteten Luft im Diffusor 8 ist hier durch einen Pfeil S gekennzeichnet.

Ferner sind noch eine Zuführleitung 16 vom Verdichteraustritt 9 zum Motor 2 sowie eine Abgasleitung 17 vom Motor 2 zum Turbinengehäuse 13 dargestellt.

Durch diese erfindungsgemäße Anordnung der Abgasrückführungsleitung 3 wird das Abgas AG durch die Abgaseinmischöffnung 12 in die Ansaugleitung 10 geleitet. Hier trifft das Abgas AG auf die Frischluft FL, die dann zusammen in Strömungsrichtung der Frischluft FL durch die Mischeinrichtung 18, insbesondere den Blütenmischer, vermischt werden. Nach der fast vollständigen Durchmischung der beiden Stoffströme strömt das Gemisch durch den Verdichtereintritt 11 in den Diffusor 8.

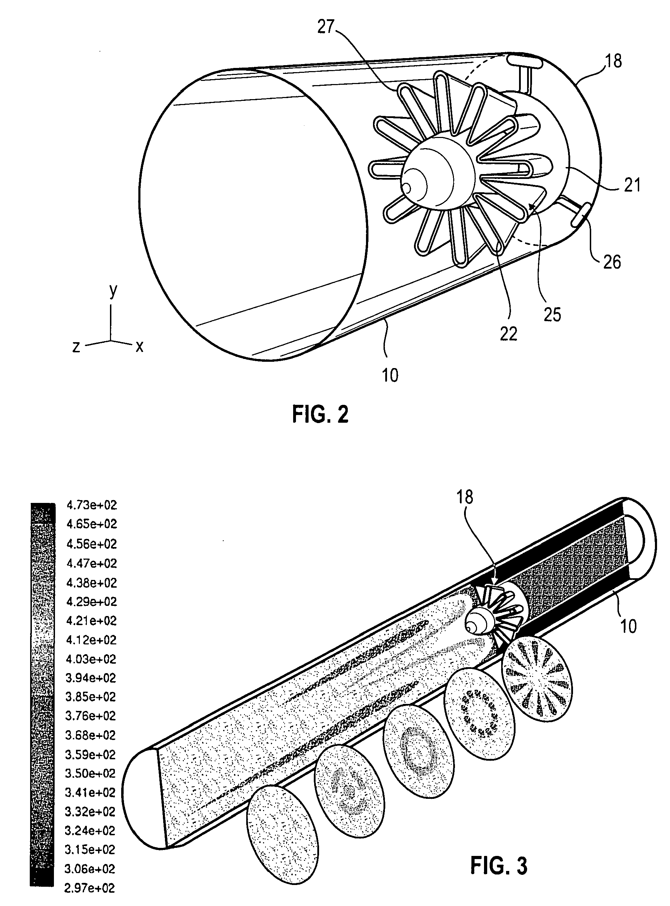

In Fig. 2 ist die Mischeinrichtung 18, insbesondere der Blütenmischer, dargestellt. Der Blütenmischer weist in der Mitte einen strömungsgünstig ausgebildeten Kernkörper 25 sowie einen diesen Kernkörper 25 umgebenden ringförmigen Mischerkörper 21 auf, an dem Strömungsleitbleche /Mischerbleche 22 angeordnet sind.

Die Geometrie und Anordnung dieser Mischerbleche 22 sind maßgeblich an einer möglichst vollständigen Durchmischung beteiligt. Dazu ist es erforderlich, dass die in der Leitungsmitte befindliche Kernströmung radial nach außen und die am Außenrand befindliche Nebenströmung radial nach innen geleitet werden. Durch eine mäanderförmige Gestaltung der Mischerbleche wird abwechselnd eine radiale Strömungskomponente nach innen und außen erzeugt, wodurch eine Vergrößerung der Grenzfläche beider Strömungen und damit eine bessere Durchmischung zustande kommt.

Fig. 3 stellt die numerische Simulation der Durchmischung zweier unterschiedlicher Stoffströme eines in der Ansaugleitung 10 angeordneten Blütenmischers 18 dar. Man erkennt, dass vor dem Blütenmischer zwei deutlich getrennte Gasströme mit unterschiedlichen Temperaturen vorhanden sind. Im Inneren der Leitung befindet sich der wärmere zurückgeführte Abgasstrom mit etwa 473 K und am Außenrand ist der kältere Ansaugluftstrom mit ca. 297 K zu finden. Unmittelbar nach dem Mischer findet ein rascher Temperaturausgleich beider Strömungen statt, sodass mittlere Temperaturen im Bereich von ca. 350 K bis 390 K entstehen.

Zur Ergänzung der Offenbarung wird explizit auf die zeichnerische Darstellung der Erfindung in der Figur verwiesen.

### Bezugszeichenliste

- 1: Turbolader/Abgasturbolader
- 2: Motor
- 3: Abgasrückführungsleitung
- 4: Turbine
- 5: Verdichter
- 6: Verdichterrad
- 7: Verdichtergehäuse
- 8: Diffusor
- 9: Verdichteraustritt
- 10: Ansaugleitung
- 11: Verdichtereintritt
- 12: Abgaseinmischöffnung
- 13: Turbinengehäuse
- 14: Turbinenrad
- 15: Rotorwelle
- 16: Zuführleitung
- 17: Abgasleitung
- 18: Mischeinrichtung, insbesondere Blütenmischer
- 19: Regelventil
- 20: Kühler
- 21: Ringförmiger Mischerkörper
- 22: Strömungsleitbleche/Mischerbleche
- 23: Mischerhalterung
- 24: Dieselpartikelfilter
- 25: Zentraler Strömungskörper
- 26: Fixierstege
- 27: Äußerer Bereich der Leitbleche
- AG: Abgas
- FL: Frischluft
- S: Strömungsrichtung der verdichteten Luft

## Patentansprüche

1. Verbrennungsmotor (2) mit einem Turbolader (1) - mit zumindest einer Abgasrückführungsleitung (3), die über eine Abgaseinmischöffnung (12) in eine Ansaugleitung (10) des Verbrennungsmotors (2) eintritt;
- mit einer Turbine (4);
- mit einem Verdichter (5);
• der mit der Turbine (4) antriebsverbunden ist, und
• der ein Verdichterrad (6) aufweist, das in einem Verdichtergehäuse (7) angeordnet ist, in das die Ansaugleitung (10) über einen Verdichtereintritt (11) mündet; und
- mit einer Mischeinrichtung (18),
**dadurch gekennzeichnet,**
- **dass** die Mischeinrichtung (18) in der Ansaugleitung (10), in Frischluftströmungsrichtung (F_{L}) gesehen, nach der Abgaseinmischöffnung (12) und vor dem Verdichtereintritt (11) angeordnet ist,
- **dass** die Mischeinrichtung (18) mäanderförmige Leitbleche zur Leitung einer äußeren Nebenströmung radial nach innen aufweist,
- **dass** die Mischeinrichtung (18) die Kernströmung nach außen und die Nebenströmung nach innen leitet und
- **dass** die Mischeinrichtung (18) als Blütenmischer ausgebildet ist.

2. Verbrennungsmotor nach Anspruch 1, **dadurch gekennzeichnet, dass** die Mischeinrichtung (18) einen zentralen Strömungskörper (25) zur Beschleunigung einer Kernströmung aufweist.

3. Verbrennungsmotor nach Anspruch 2, **dadurch gekennzeichnet, dass** die Mischeinrichtung (18) die innere Kernströmung radial nach außen leitet.

4. Verbrennungsmotor nach einem der Ansprüche 1 bis 3, **dadurch gekennzeichnet, dass** die Mischeinrichtung (18) durch einen äußeren Bereich (27) von Leitblechen und/oder durch Stege (26) am ringförmigen Mischerkörper (21) in der Ansaugleitung (10) fixiert ist.

## Claims

1. Internal combustion engine (2) having a turbocharger (1)
- having at least one exhaust-gas recirculation line (3) that enters via an exhaust-gas mixing-in opening (12) into an induction line (10) of the internal combustion engine (2);
- having a turbine (4);
- having a compressor (5);
• that is drive-connected to the turbine (4) and
• that has a compressor wheel (6) that is arranged in a compressor housing (7) into which the induction line (10) enters via a compressor inlet (11); and
- having a mixing device (18),
**characterized**
- **in that** the mixing device (18) is arranged in the induction line (10), as seen in the fresh air flow direction (F_{L}), after the exhaust-gas mixing-in opening (12) and before the compressor inlet (11),
- **in that** the mixing device (18) has meandering guide plates for conducting an outer, secondary flow radially inward,
- **in that** the mixing device (18) conducts the core flow outward and conducts the secondary flow inward and
- **in that** the mixing device (18) is embodied as a flower-shaped mixer.

2. Internal combustion engine according to Claim 1, **characterized in that** the mixing device (18) has a central flow body (25) for accelerating a core flow.

3. Internal combustion engine according to Claim 2, **characterized in that** the mixing device (18) conducts the inner core flow radially outward.

4. Internal combustion engine according to one of Claims 1 to 3, **characterized in that** the mixing device (18) is fixed to the annular mixer body (21) in the induction line (10) by an outer region (27) of guide plates and/or by webs (26).

## Revendications

1. Moteur à combustion interne (2) comprenant un turbocompresseur (1), comprenant au moins une conduite de recirculation de gaz d'échappement (3) qui pénètre par le biais d'une ouverture de mélange de gaz d'échappement (12) dans une conduite d'admission (10) du moteur à combustion interne (2) ; comprenant
- une turbine (4) ;
- un compresseur (5) ;
qui est connecté par entraînement à la turbine (4), et
qui présente une roue de compresseur (6), qui est disposée dans un boîtier de compresseur (7) dans lequel débouche la conduite d'admission (10) par le biais d'une entrée de compresseur (11) ; et
- un dispositif de mélange (18),
**caractérisé en ce que**
- le dispositif de mélange (18) est disposé dans la conduite d'admission (10), vu dans la direction d'écoulement d'air frais (F_{L}), après l'ouverture de mélange de gaz d'échappement (12) et avant l'entrée de compresseur (11),
- le dispositif de mélange (18) présente, radialement à l'intérieur, des tôles directrices en méandres, pour guider un écoulement auxiliaire extérieur,
- le dispositif de mélange (18) guide l'écoulement de coeur vers l'extérieur et l'écoulement auxiliaire vers l'intérieur,
- le dispositif de mélange (18) est réalisé sous forme d'un mélangeur en forme de fleur.

2. Moteur à combustion interne selon la revendication 1, **caractérisé en ce que** le dispositif de mélange (18) présente un corps d'écoulement central (25) pour accélérer un écoulement de coeur.

3. Moteur à combustion interne selon la revendication 2, **caractérisé en ce que** le dispositif de mélange (18) conduit l'écoulement de coeur interne radialement vers l'extérieur.

4. Moteur à combustion interne selon l'une quelconque des revendications 1 à 3, **caractérisé en ce que** le dispositif de mélange (18) est fixé par une région extérieure (27) par des tôles directrices et/ou par des nervures (26) au niveau du corps de mélange annulaire (21) dans la conduite d'admission (10).
